(19) Europäisches Patentamt

European Patent Office

Office européen des brevets

(11) **EP 2 489 872 B1**

(12) **EUROPEAN PATENT SPECIFICATION**

(45) Date of publication and mention
of the grant of the patent:
**20.03.2013  Bulletin 2013/12**

(51) Int Cl.:
***F03D 7/02*** (2006.01)

(21) Application number: **11001206.9**

(22) Date of filing: **15.02.2011**

(54) **Blade load reduction for wind turbine**

Schaufellastverringerung für Windrad

Réduction de la charge de pale pour éolienne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.08.2012  Bulletin 2012/34**

(73) Proprietor: **SSB Wind Systems GmbH & Co. KG
48499 Salzbergen (DE)**

(72) Inventor: **Bertolotti, Fabio
48455 Bad Betnheim (DE)**

(56) References cited:
**EP-A1- 2 037 119       WO-A1-2005/090781
WO-A1-2010/122316**

• CASELITZ P ET AL: "REDUCTION OF FATIGUE
LOADS ON WIND ENERGY CONVERTERS BY
ADVANCED CONTROL METHODS", EUROPEAN
WIND ENERGY CONFERENCE, XX, XX, 1 October
1997 (1997-10-01), pages 555-558, XP008031751,

**Description**

The present invention relates to wind turbines with pitchable blades, and to a system for constructing blade-pitch commands based on signals indicative of the wind-turbine state, for load reduction on the wind turbine components.

The increase of average wind speed with height above ground has lead to the use of very tall towers, e.g. 60 to 120 meters, for supporting the nacelle and rotors of wind turbines. To extract energy from the wind, the wind turbine rotor must decelerate the wind, thereby placing large thrust loads on the tower. The combination of tall towers and large unsteady loads caused by gusts and eddies in a turbulent wind can potentially generate large tower-top motions and tower oscillations.

Numerous ideas have been put forth for using the aerodynamic forces on the rotor blades to dampen the tower oscillations along the rotor axis direction.

US 4,420,692 describes a system using an accelerometer signal indicative of the acceleration of the tower top in the direction of the rotor axis to control the blade pitch angles and produce a variation in the total thrust in anti-phase with the tower oscillations.

US 2008/0206051 describe a similar system. Other ideas have been put forth for controlling the side-to-side tower oscillations (i.e. perpendicular to the rotor axis) using either the aerodynamic forces or the generator torque.

US 7,309,930 propose to change the torque demand of the electrical generator in the nacelle to generate force moments in anti-phase with the tower later motions, thereby creating effective tower damping.

US 7,400,055 propose to dampen the tower lateral movement by a combination of generator and blade pitch control.

Thus, in the prior art, the focus has been to dampen tower oscillations by generating anti-phased forces in the drive-train. The underlying motivation is to lower the loads of the tower, allowing a more flexible and less costly tower to be used. This benefit is achieved at the expense of fatigue and increased loading in the drive-train components involved in the transfer of the anti-phased forces, thereby leading to increased costs both in the drive-train design as well as in the maintenance costs during operation.

A tower motion along the direction of the rotor axis is accompanied by a rotation of all the tower-top structure about a pivot point typically located in the lower portion of the tower. This rotation causes gyroscopic loads on the rotor blades, which then propagate through the drive train. This tower motion can be particularly pronounced in off-shore installations in which the turbine is placed on top of a floating structure or platform, and both wind variations and wave loads can cause the entire wind turbine and platform to heave forwards and backwards in the direction of the rotor axis. Herein, this motion is called as "nautical pitching", to distinguish it from "blade pitching".

In an on-shore wind-turbine installation, the rotor axis of the wind turbine is periodically changed with a manoeuvre called "yawing" to keep the wind turbine essentially aligned with the averaged wind direction. Additional, non-commanded, "yawing" motion on an on-shore installation comes from the twist within the tower. In a floating off-shore installation, this non-commanded "yawing" motion can be significantly larger than on-shore due to the more flexible attachment of the floating system to the sea bed below. This non-commanded "yawing" motion is both harmful and unwanted due to the large gyroscopically loads it induces within the blades and drive-train, and while it can be partially constrained by using a multitude of cables attached to the sea floor, it cannot be entirely eliminated.

In regards to reducing blade loads, generic strategies have been put forth for using blade-pitching to reduce blade stresses, irrespective of the source of the stresses. For example, strategies have been presented for reducing the blade stresses based on direct measurements of the blade strains and/or blade deformations. These strategies produce pitch-angle commands that vary from blade to blade, as well as with rotor angular position (azimuth), hence the name "individual pitch control". While some reduction of blade loads has been measured, mainly for stochastic loads from turbulent wind, the proposed strategies are not suited for cancelling gyroscopic loads for reasons of causality: gyroscopic forces occur before blade displacements, thus preventing the control signals from being issued at the correct time. Additionally, the input signals to the controller, i.e. blade-root moments or blade deflections, have a random, stochastic component due to the turbulent nature of wind. This random component hinders the immediate identification of the onset of gyroscopically induced loads within the blade signals, further delaying, if not preventing, the onset of corrective pitch action.

WO 2005/090781 A1 shows a wind turbine with a tower which supports a nacelle and a converter unit. The output power of the converter unit is with a given range. The wind turbine has a blade pitch system for individually controlling a blade pitch angle of a rotor blade of the turbine (blade pitching). The pitch angle of the rotor blade changes with respect to minimizing variations in the thrust of rotor blades of the turbine in the wind direction. The wind turbine is further equipped with a rotor position sensor for generating a rotor-position signal indicative of a rotor azimuthal position and a rotor rotational-rate sensor for measurement a rotational speed of the rotor. In a computational unit the thrust of the rotor blade in the wind direction is used actively to counter motions of the wind turbine tower by regulating the pitch angels of the rotor blades. The tower motions include also motions forwards and backwards in the direction of the rotor axis (nautical pitch).

The known wind turbine produce a counter force by the blade pitch against the motions of the tower. It is realized by an additional gyroscoping load on the blades, which then propagates through the drive train and to the yaw bearings of the nacelle and deliver additional loadings in the nacelle, which has to eliminate or compensate by additional reinforcement devices there. Further, it is not ensure that the counter motion of the blade pitch deliver a "reinforcement force" in the blade instead of a counter force, e-g. if the pitch angel is moved early or late.

WO 2010/122316 describes a floating wind turbine with a rotor blades and a controller unit having a yaw sensor for controlling the torque based upon an input which is indicated of a wave-induced motion of the turbine. In this way the motion of a tower of the wind turbine is taken into account. The rotor comprises variable pitch blades whose pitch angel is attached by the control unit. However, the blade pitch system has no influence to the motion of the tower.

EP 2 037 119 A1 describes a wind turbine having a pitch controller with a pitch drive for pitching rotor blades of the turbine and a yaw system with a yaw drive load controller, in which the pitch controller is connected to the yaw drive load controller output for receiving a horizontal pitch signal. A sensor unit for the registration of the motion of the tower along the direction of the rotor axis is not laid up.

Caselitz, P. et al "Reduction of fatigue loads on wind energy converters by advanced control methods", European Wind Energy Conference, October 1977 (1977-10) pages 555-558, describes 3 control units for wind turbines. The control system incorporates load estimation, active damping of the tower oscillations and tilt and yaw moment compensation.

It is thus desirable to have a means for effectively cancelling the unwanted and harmful gyroscopic loads on the blades due to tower forward-aft motion and non-commanded yawing. In addition it is also desirable to achieve this load cancellation without subjecting the drive-train components to additional loads and fatigue.

It is a first objective of the invention to provide a system for the elimination of gyroscopic loads on the rotor blades due to tower motions in the direction of the rotor axis.

It is a second objective of the invention to provide a system for the elimination of gyroscopic loads on the rotor blades due to yawing rotations about the axis of the tower.

It is a third objective of the invention to provide a robust process of gyroscopic load cancellation that is based on clean, non-stochastic, deterministic signals.

The invention provides a wind turbine having a hub rotably attached to a nacelle, at least two blades rotationally attach to the hub to allow a change in blade pitch angle, a blade-pitch system for individually controlling the blade-pitch angle of each blade, a supervisory control unit for issuing a first pitching command, a rotor position sensor for generating a rotor-position signal indicative of the rotor azimuthally position, a rotor-rotational-rate sensor generating a rotor-rotational-rate signal indicative of the rotor rotational speed, and a tower for supporting the nacelle, comprising a nautical-pitch-rate sensor for generating a nautical-pitch-rate signal indicative of the nautical-pitch-rate of the wind turbine and a computational unit receiving turbine-state signals comprising the rotor-position signal, the rotor-rotational-rate signal, and the nautical-pitch-rate signal, whereby the computational unit calculating a second pitching command based on the turbine-state signals, add the second pitching command to the first pitching command to obtain the total pitching command, and transmit the total pitching command to the blade pitch system, and the computational unit de-activates the second pitching command when the deviation between commanded and actual blade-pitch angle exceeds a predetermined threshold.

In a further preferred embodiment the second pitching command generates aerodynamic forces on the blades that attenuate the gyroscopically induced loads on the wind turbine blades due to the nautical-pitch-rate motion.

In a further embodiment the turbine-state signals comprises a wind field sensor generating a wind-field signal indicative of the wind speed and direction at the turbine.

Additionally, the turbine-state signals comprise further a yaw-rate sensor generating a yaw-rate signal indicative of the yawing rate of the wind turbine, and wherein the computational unit calculates an additional third pitching command based on the turbine-state signals, adding the third pitching command to the first and second pitching command to obtain the total pitching command, and transmitting the total pitching command to the blade pitch system, whereby the third pitching command leads to aerodynamic forces being generated on the blades that attenuate the gyroscopically induced loads on the blades due to the yaw-rate.

Further features, properties and advantages of the invention will be clear from the following description of other embodiments in conjunction with the accompanying drawings.

Figure 1 shows a wind turbine on an offshore floating installation, and the definition of the nautical-pitch-angle.
Figure 2 shows the wind turbine rotor (blades and hub), the nautical-pitch-rate sensor, and the nacelle attached to the top of the tower.
Figure 3 shows the wind turbine rotor (blades and hub) and the nacelle attached to the top of the tower and shows the definition of blade azimuthally angle.
Figure 4 shows the components of the "gyroscopic load cancelling system" in a first embodiment of the invention;
Figure 5 shows the wind turbine rotor (blades and hub), the nautical-pitch-rate sensor, the yaw-rate sensor, and the nacelle attached to the top of the tower.

Figure 6 shows the components of the "gyroscopic load cancelling system" in a second embodiment of the invention.

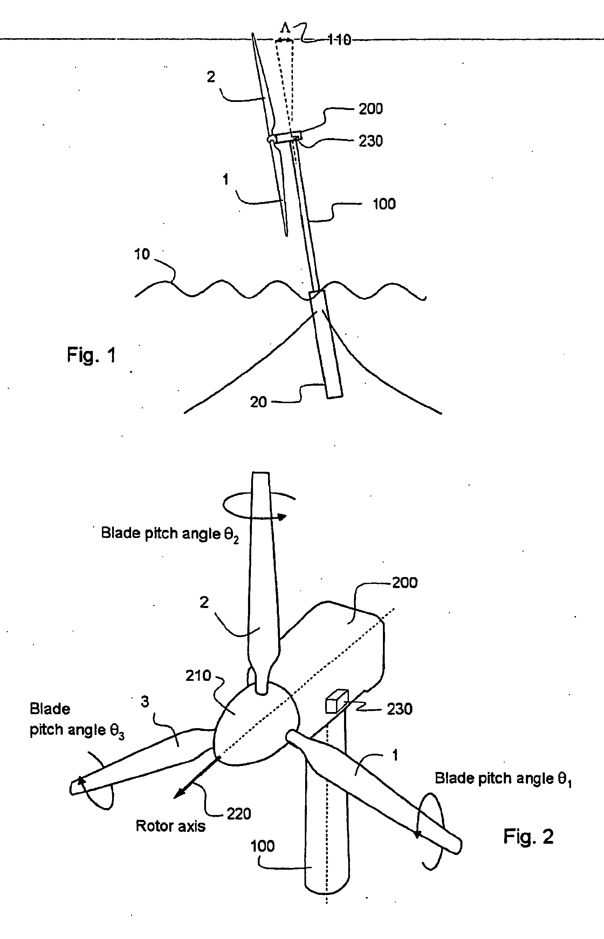

A wind turbine comprises two or more blades 1, 2 and 3 in figures 1 and 2, attached to a hub 210 which rotates about rotational axis 220 relative to the nacelle 200. The rotational speed of the hub 210 is denoted herein by the letter $\Omega$. With the exclusion of this rotational degree of freedom, the hub is fixedly attached to the nacelle. Within the hub, each blade has a pitch-change mechanism to change the angle of attack of the blade. Blade pitch mechanisms are well known in the art and are not shown in the figures. With the exclusion of the blade pitching degree of freedom, each blade is fixedly attached to the hub through a bearing unit. This type of rotor is called a "rigid rotor". The nacelle is supported by a tower 100. The invention herein described is applicable to both onshore and offshore wind-turbine locations. In figure 1 the wind turbine is shown supported by a floating structure 20 on sea 10, which is itself attached to the sea floor using cables.

### Nautical Pitch

As the "nautical pitch angle" the rotational displacement of the tower axis is referred, defined at the tower top, away from the vertical and in the direction of the rotor axis 220. The nautical pitch angle is labelled with the letter A as indicated by the numeral 110 in figure 1. The "nautical"' pitching motion is also described in the art as a tower or nacelle "forward and aft motion". This motion occurs most prominently in floating offshore structures, but it also occurs, to a lesser degree, on wind turbines installed on-shore.

A tilt-angle-rate measuring device, shown at 230, provides a signal $\lambda$ indicative of the rate of change in time of the nautical-pitch angle A, shown at 110. It is known in the art that a tilt-angle-rate measuring device can be constructed from the combination of a tilt-angle measuring device measuring the angle A, and a time differentiator to obtain the rate of change of the angle A with time.

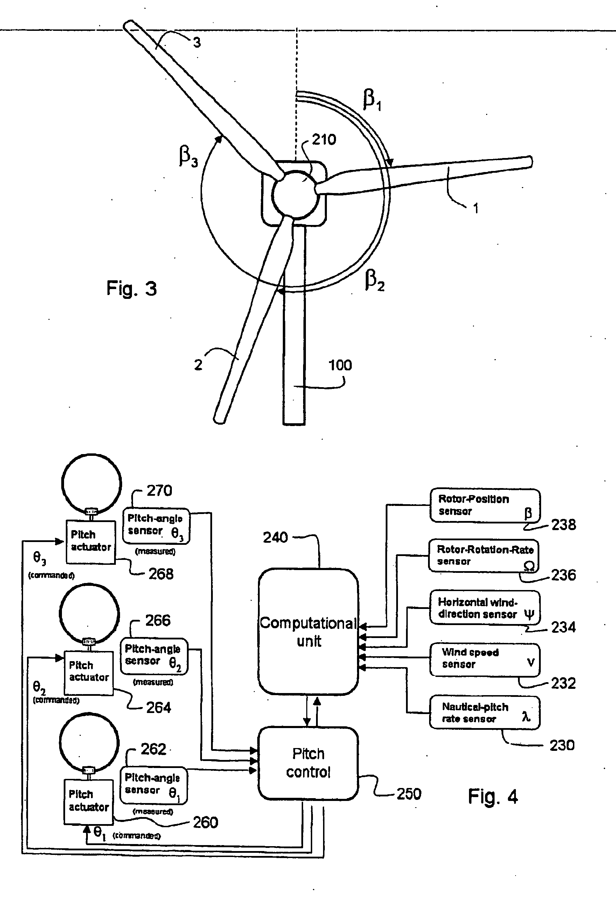

The blade azimuthally position is described by the angle of any one blade with the vertical. In reference to figure 3, this angle is labelled $\beta_1$ for blade 1, $\beta_2$ for blade 2, and $\beta_3$ for blade 3. In a three-bladed turbine, these angles are related by 120 degree offsets. Without loss of generality, we take blade angle $\beta_1$ to also define the rotor azimuthally angle. Thus, the time derivative of $\beta_1$ equals the rotor rotational rate $\Omega$.

The invention concerns a computational unit, labelled 240 in figure 4, receives turbine-state signals comprising the current rotor position of rotor $\beta_1$ from a rotor position sensor 238; the rotor rotational-rate $\Omega$, from a rotor rotational rate sensor 236; the current nautical-pitch rate $\lambda$, from a nautical-pitch-rate sensor 230; the current estimate of the relative wind direction $\Psi$ measured relative to the rotor axis direction, from a wind-direction sensor 234; and the current wind speed V, from a wind speed sensor 232.

Preferentially, the rotor rotational-rate sensor 236 is a routine implemented at the software level within computational unit 240; with the routine computing the current rotor rotational rate $\Omega$ by time differentiation of the $\beta_1$ signal.

The wind sensors 232 and 234 occur most commonly in the form of a wind anemometer and a wind vane positioned above the nacelle. A more preferable value for the wind direction and wind speed is obtained from wind estimations based on blade loads. This approach has the benefit of faster response to wind changes, and is free of the influence of the blades' wakes.

During turbine operation, it is commonly known that the blade-pitch angles are varied by a supervisory control unit (not shown) according rules well known in the art to regulate the aerodynamic power of the rotor. Herein refer to this it is called as the first pitching command the commands issued by the supervisory control unit. The first pitching command comprises collective pitch commands that pitch all three blades by an equal amount simultaneously, and, optionally, can also contain, superimposed, pitch commands specific to each blade, leading to what is known in the art as "individual pitch control". The component of the first pitching command directed to blade i is labelled with the symbol $P^c_i$.

The computational unit 240 computes the pitch position for each blade, as function of time, based on the sensor input data transmitted to the computational unit. The function of the computational unit is to calculate, or obtain, a second pitching command such that gyroscopic forces caused by the nautical-pitch $\lambda$ are cancelled, up to a predetermined degree, by aerodynamic forces. The second pitching command comprises components directed to each individual blade i = 1, 2, 3. These command components is labelled with the symbol $P^o_i$.

The second pitching commands $P^o_i$ are added to the first pitching commands $P^c_i$ to form the complete blade-pitch command $P^{tot}_i$ for each blade $i$ = 1, 2, 3

$$P^{tot}_i = P^c_i + P^o_i. \qquad (1)$$

Since the gyroscopic force on each blade due to nautical-pitch-rate $\lambda$ is linearly proportional the nautical-pitch-rate $\lambda$, and since the gyroscopic force on each blade has a one-per-revolution variation, the command $P^o_i$ components of the second pitching command have essentially the form

$$P^o_i = \lambda \, G_p \, cos \, (\beta_i + \Phi_p) \qquad (2)$$

Where:

$Pp_i$ is the load cancelling blade-pitch angle value for nautical-pitch-rate
$\lambda$ is the nautical-pitch-angle rate
$G_p$ is the gain, for nautical-pitch motions
$\beta_i$ is the blade azimuthally angle
$\Phi_p$ is the phase offset for nautical-pitch motions

The gain factor $G_p$ depends functionally on the wind velocity and direction over the rotor blades. The wind velocity and direction over the rotor blades are themselves dependent on measured quantities available to the computational unit 240, namely the rotor angular velocity $\Omega$, the wind speed V, the relative wind direction $\Phi$ and the nautical-pitch-rate $\lambda$. Thus, the gain factor $G_p$ depends functionally on the turbine-state signals reported to the computational unit. The phase $\Phi_p$ depends mostly on the geometry and stiffness of the blades and of the main rotor shaft. For articulated blades, the magnitude of $\Phi_p$ is 90 degrees, and this magnitude decreases progressively as the blade-to-hub connection becomes stiffer. The functional dependence of gain $G_p$ and phase $\Phi_p$ on the measured signals available to the computational unit 240 is stored in a digital data map in the computational unit in the form of an explicit formula, or in tabular form, or in a mixture of explicit formulas and tabular values.

During operation, the computational unit 240 reads the current value of the nautical-pitch-rate $\lambda$, the rotational rotor speed $\Omega$, the wind speed $V$, the relative wind direction $\Phi$ and the current rotor azimuth angle $\beta_1$. In cases with noise in the signal for $\lambda$ a second nautical-pitch-rate signal $\underline{\lambda}$ is obtained from the instantaneous signal $\lambda$ via a process of averaging, or, equivalently, via a zero-phase-shift low-pass filter, and used in the construction of the second pitching command in place of the instantaneous signal $\lambda$. This filtering step removes the signal noise, as well as vibrations with periods much shorter than the period of the characteristic lowest mode of nautical-pitching of the complete turbine assembly. From the values of the turbine-state signals, the gain $G_p$ and phase $\Phi_p$ are computed and/or retrieved from the stored digital data map and combined with the blade azimuth angle $\beta_i$ and the second nautical pitch-rate signal $\underline{\lambda}$ to produce the components of the second pitching command $Pp_i$ for each blade $I$ = 1, 2, 3. Lastly, the first pitching commands $P^c_i$ and the second pitching commands are $Pp_i$ added together and sent to the pitch-drive unit 250.

The pitch unit drive 250 directly controls and drives each pitch actuator 260, 264 and 268, and there through, the blade-pitch of blades 1, 2 and 3. These pitch actuators can be either electric or hydraulic, as is well known in the art. The measured blade-pitch angle for each blade is measured by a blade-pitch angle sensor, shown at 262, 266 and 270 respectively for each blade, and a signal indicative of the actual blade-pitch position is sent to the pitching control 250 to close the blade-pitch control loop and, thereby verify that the commanded and actual blade-pitch angles agree. In case of a disagreement between commanded and expected pitch angles, a warning signal is sent by the pitch control 250 to the computational unit 240. The computational unit 240 de-activates the second pitching command when the deviation between commanded and actual blade-pitch angle exceeds a predetermined threshold.

The construction of the functional or tabular relation in the digital data map can be done numerically, whereby the best load-minimizing values of $G_p$ and $\Phi_p$ are determined for a wide range of the turbine-state signals and stored in tabular or functional form. Alternatively, the best load-minimizing values of $G_p$ and $\Phi_p$ can be determined by instrument a real turbine with blade load sensors and searching for the values of $G_p$ and $\Phi_p$ that minimize the blade loads at given values of the turbine-state signals.

Basing the second pitching command on turbine-state signals which are indicative of the direct dynamical quantities causing gyroscopic forces on the blades, rather than indirect signals (e.g. blade loads) that show the result, but not the cause, of the gyroscopic forces, allows the second pitching command to start the blade pitch activity at the correct instant in time.

The exclusive use of well determined and well measured signals that are essentially free of stochastic, random, fluctuations, within the formulation of the second pitching command of this invention, such as that shown in equation (4), renders the entire "gyroscopic load cancelling" process more robust, simpler, and much more responsive and effective than approaches based on signals indicative of blade loads, as disclosed in the prior art, which must deal with the large stochastic variations due to wind turbulence using filters or equivalent means.

**Non-commanded yawing**

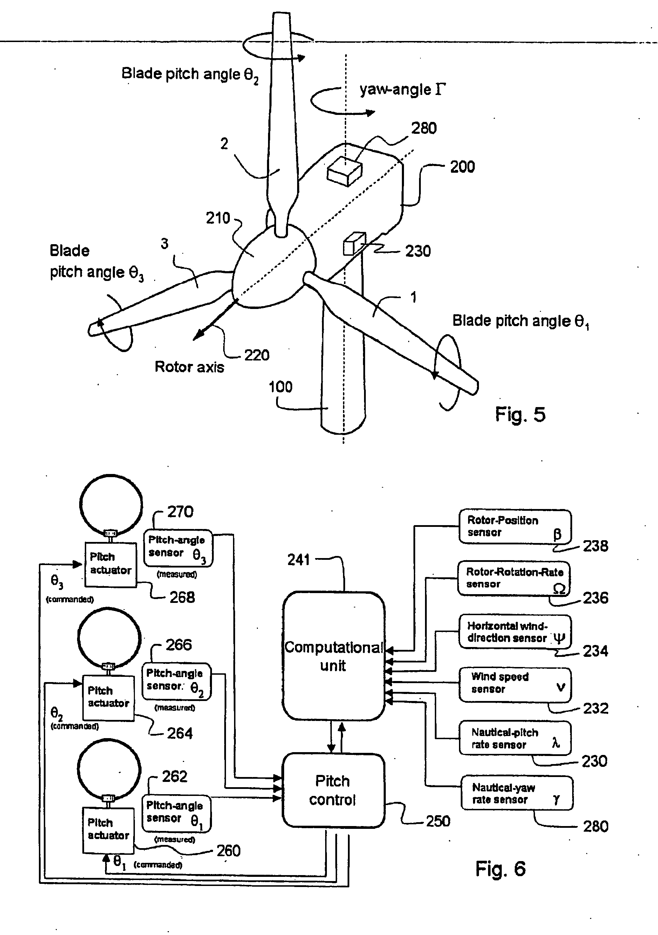

In another embodiment of the invention, a yaw-rate sensor 280, as shown in figure 5, is attached to the nacelle 200. This sensor measures the time rate of change of the yaw-angle $\Gamma$. The angle $\Gamma$ is defined as the rotational displacement between (a) the projection of the rotor axis 220 onto a horizontal plane and (b) a fixed direction with respect to the fixed ground, such as, for example, the true north direction. In an on-shore wind-turbine installation, the angle $\Gamma$ can vary due to only two processes, namely the tower twist motion, and the commanded yaw-angle. As is well known in the art, this commanded yaw angle is prescribed by the turbine supervisory controller to make the rotor axis 220 track the wind.

In a floating off-shore installation, the yaw-angle $\Gamma$ can vary due to an additional process, namely the rotation of the entire floating apparatus with respect to solid ground, leading to non-commanded yawing rotation. This non-commanded rotation is unwanted, and while it can be partially constrained by cables attached to the sea floor, it cannot be entirely eliminated.

The time-rate-of-change of the yaw angle $\Gamma$ is labelled with $\gamma$. The inventive "cyclic load cancellation system" described above for gyroscopic loads due to nautical-pitch-rates can be equally applied to cancel gyroscopic loads produced by the yaw-rate.

In particular, a computational unit, labelled 241 in figure 6, receives turbine-state signals comprising the current rotor position of rotor $\beta_1$ from a rotor position sensor 238; the current rotor rotational rate $\Omega$, supplied by an rotor rotational-rate sensor 236 that is preferentially operative at the software level as described above; the current estimate of the relative wind direction $\Psi$ measured relative to the rotor axis direction by a wind-direction sensor 234; the current wind speed V, from a wind speed sensor 232; the current nautical-pitch rate $\lambda$, provided by the nautical-pitch-rate sensor 230; and the current yaw $\gamma$ rate provided by the yaw-rate sensor 280.

The computational unit 241 computes the pitch position.for each blade, as function of time, based on the wind-state signals. The function of the computational unit is to calculate a second pitching command with components $P^p_i$ for each blade $l$=1, 2, 3 such that gyroscopic forces caused by the nautical-pitch rate $\lambda$ are cancelled, up to a predetermined degree, by aerodynamic forces, and a third pitching command with components $P^y_i$ for each blade $l$=1, 2, 3 such that the gyroscopic forces caused by the yaw rate $\gamma$ are cancelled, up to a predetermined degree by aerodynamic forces. Both "load cancelling" blade-pitch commands $P^p_i$ and $P^y_i$ are added to the first pitching command $P^y_i$ to form the complete blade-pitch command for each blade $i$= 1, 2, and 3:

$$P^{tot}_i = P^c_i + P^p_i + P^y_i \qquad (3)$$

The components of the third pitching command are given by a formula essentially of the form,

$$P^y_i = \gamma\, G_y \cos(\beta_i + \Phi_y) \qquad (4)$$

where,

$P^y_i$ is the load cancelling blade-pitch angle value for yaw-rate
$\gamma$ is the yaw-rate
$G_y$ is the gain, for yaw-rate motions
$\beta_i$ is the blade azimuthally angle
$\Phi_y$ is the phase offset for yaw-rate motions.

The gain factor $G_y$ depends functionally on the wind velocity and direction over the rotor blades. The wind velocity and direction over the rotor blades are themselves dependent on measured quantities available to the computational unit 24, namely the rotor angular velocity $\Omega$, the wind speed V, the relative wind direction, $\Phi$ the nautical pitch rate $\lambda$ and the yaw-rate $\gamma$ . Thus, the gain factor $G_y$ depends functionally on the turbine-state signals reported to the computational unit.

The phase $\Phi_y$ depends, like $\Phi_p$, mostly on the geometry and stiffness of the blades and of the main rotor shaft. The functional dependence of gain $G_y$ and phase $\Phi_y$ on the turbine-state signals is stored in a digital data map within the computational unit 241 in the form of an explicit formula, or in tabular form, or in a mixture of explicit formulas and tabular values. During operation, computational unit 241 reads the turbine-state signals, computes the "gyroscopic load cancelling" second and third pitching commands $P^p_i$ and $P^y_i$, and adds these two pitching commands to the first pitching command $P^c_i$ to form the complete blade-pitch command $P^{tot}_i$ for blade $i$ = 1, 2, 3.

It is understood to those skilled in the art, that the computational units 240, 241 perform a function that can be achieved via software in a dedicated and separate hardware unit, or via additional commands within the software residing in the supervisory control unit.

**Claims**

1. A wind turbine having a hub (210) rotably attached to a nacelle (200), at least two blades (1, 2, 3) rotationally attached the hub (210) to allow a change in blade pitch angle ($\Theta_1$, $\Theta_2$ $\Theta_3$), a blade-pitch system (250) for individually controlling the blade-pitch angle ($\Theta_1$, $\Theta_2$ $\Theta_3$) of each blade, a supervisory control unit for issuing a first pitching command, a rotor position sensor (238) for generating a rotor-position signal ($\beta$) indicative of the rotor azimuthal position, a rotor-rotational-rate sensor (236) for generating a rotor-rotational-rate signal ($\Omega$) indicative of the rotor rotational speed, and a tower (100) for supporting the nacelle (200), Comprising
a nautical-pitch-rate sensor (230) for generating a nautical-pitch-rate signal ($\lambda$) indicative of the nautical-pitch-rate of the wind turbine and a computational unit (240, 241) for receiving turbine-state signals comprising the rotor-position signal ($\beta$), the rotor-rotational-rate signal ($\Omega$), and the nautical-pitch-rate signal ($\lambda$), whereby the computational unit (240, 241) is designed to calculate a second pitching command based on the turbine-state signals, add the second pitching command to the first pitching command to obtain the total pitching command, and transmit the total pitching command to the blade pitch system (250),
**characterised in that** the computational unit (240, 241) is designed to de-activate the second pitching command when the deviation between commanded and actual blade-pitch angle exceeds a predetermined threshold.

2. The wind turbine as claimed in claim 1, whereby the second pitching command is designed to generate aerodynamic forces on the blades (1, 2, 3) that attenuate the gyroscopically induced loads on the wind turbine blades (1, 2, 3) due to the nautical-pitch-rate motion.

3. The wind turbine as claimed in claim 1 or 2, whereby the pitch control (250) is designed to send a warning signal to the computational unit (240, 241), in case of a disagreement between commanded and actual pitch angles ($\theta_1$, $\theta_2$, $\theta_3$).

4. The wind turbine as claimed in claim 1 to 3, whereby in cases with noise in the nautical-pitch-rate signal ($\lambda$) the wind turbine is designed to obtain a second nautical-pitch-rate signal from the instantaneous signal ($\lambda$) via a process of averaging, or, equivalently, via a zero-phase-shift low-pass filter, and to use the second nautical-pitch-rate signal in the construction of the second pitching command in place of the instantaneous signal ($\lambda$).

5. The wind turbine as claimed in claim 1 to 4, wherein the turbine-state signals comprise a wind field sensor (232) for generating a wind-field signal (V) indicative of the wind speed and direction at the turbine.

6. The wind turbine as claimed in claim 1 to 5, wherein the turbine-state signals comprise a yaw-rate sensor (280) for measuring the time rate of change of the yaw-angle ($\Gamma$) generating a yaw-rate signal (Y) indicative of the yawing rate of the wind turbine.

7. The wind turbine as claimed in claim 1 to 6, wherein the computational unit (240, 241) is designed to calculate an additional third pitching command based on the turbine-state signals, add the third pitching command to the first and second pitching command to obtain the total pitching command, and to transmit the total pitching command to the blade pitch system (250).

8. The wind turbine as claimed in claim 7, whereby the third pitching command leads to aerodynamic forces being generated on the blades (1, 2, 3) that attenuate the gyroscopically induced loads on the blades (1, 2, 3) due to the yaw-rate (Y).

**Patentansprüche**

1. Windturbine mit einer an einer Gondel (200) rotierend befestigten Nabe (210), wenigstens rotierend an der Nabe (210) befestigten Blättern (1, 2, 3,), um einen Blattpitchwinkel ($\theta_1$, $\theta_2$, $\theta_3$) zu verändern, das für ein Blattpitchsystem (250) für eine individuelle Steuerung des Blattwinkels ($\theta_1$, $\theta_2$, $\theta_3$) jedes Blattes geeignet ist, einer übergeordneten Steuereinheit zum Festlegen eines ersten Pitchbefehls, einem Rotorpositionssensor (238) zur Erzeugung eines Rotorpositionssignal ($\beta$), entsprechend der Rotorazimuthposition, einem Rotorrotationsratensensor (236) zur Erzeugung einen Rotorrotationsratensignal ($\Omega$), entsprechend der Rotorrotationsgeschwindigkeit, und mit einem Turm (100), zum Tragen der Gondel (200), umfassend:

Einen nautischen Pitchratensenor (230) zur Erzeugung eines nautischen Pitchratensignals ($\lambda$), entsprechend der nautischen Pitchrate der Windturbine, und eine Computereinheit (240, 241), um Turbinenstatussignale zu empfangen umfassend das Rotorpositionssignal ($\beta$), das Rotorrotationsratensignal ($\Omega$) und das nautische Pitchratensignal ($\lambda$),
wobei die Computereinheit (240, 241) geeignet ist, um einen zweiten Pitchbefehl zu berechnen, basierend auf die Turbinenstatussignale, wobei der zweite Pitchbefehl zu dem ersten Pitchbefehl addiert wird, um einen Gesamtpitchbefehl zu erhalten, und um den Gesamtpitchbefehl zu dem Blattpitchsystem (250) zu übertragen, **dadurch gekennzeichnet, dass** die Computereinheit (240, 241) dazu geeignet ist, den zweiten Pitchbefehl zu deaktivieren, wenn die Abweichung zwischen angeforderten und dem aktuellen Blattpitchwinkel einen vorgegebenen Bereich überschreitet.

**2.** Windturbine nach Anspruch 1, wobei der zweite Pitchbefehl dazu geeignet ist, aerodynamische Kräfte auf die Blätter (1, 2, 3) zu erzeugen, welche die gyroskopisch induzierte Belastungen auf den Windturbinenblätter (1, 2, 3) auf Grund der nautischen Pitchratenbewegung dämpfen.

**3.** Windturbine nach Anspruch 1 oder 2, wobei bei Abweichungen zwischen den angeforderten und aktuellen Pitchwinkel ($\theta_1$, $\theta_2$, $\theta_3$) die Pitchsteuerung (250) geeignet ist, ein Warnsignal zu der Computereinheit (240, 241) zu senden.

**4.** Windturbine nach Anspruch 1 bis 3, wobei bei Rauschen in dem nautischen Pitchratensignal ($\lambda$) die Windturbine dafür geeignet ist, ein zweites nautisches Pitchratensignal von dem momentanen Signal ($\lambda$) über eine Mittelwertbildung, oder äquivalent, über einen Tiefpassfilter ohne Phasenverschiebung zu erkennen, und das zweite nautische Pitchratensignal bei der Erstellung des zweiten Pitchbefehls anstelle des momentanen Signals ($\lambda$) zu verwenden.

**5.** Windturbine nach Anspruch 1 bis 4, wobei die Turbinenstatussignale einen Windfeldsensor (232) zur Erzeugung eines Windfeldsignals (V) entsprechend der Windgeschwindigkeit und Richtung zur Turbine umfasst.

**6.** Windturbine nach Anspruch 1 bis 5, wobei die Turbinenstatussignale einen Yawratensensor (280) zur Messung der zeitlichen Rate des Yawwinkels ($\Gamma$) umfassen, um ein Yawratensignal (y) zu generieren, entsprechend der Yawrate der Windturbine.

**7.** Windturbine nach Anspruch 1 bis 6, wobei die Computereinheit (240, 241) geeignet ist, einen zusätzlichen dritten Pitchbefehl auf der Basis der Turbinenstatussignale zu errechnen, wobei der dritte Pitchbefehl zu dem ersten und zweiten Pitchbefehl addiert wird, um den Gesamtpitchbefehl zu erhalten, und den Gesamtpitchbefehl zu dem Blattpitchsystem (250) zu übertragen.

**8.** Windturbine nach Anspruch 7, wobei der dritte Pitchbefehl zu aerodynamischen Kräften auf den Blätter (1, 2, 3) führt, welche die gyroskopisch induzierte Belastung auf die Blätter durch die Yawrate ($\gamma$) reduziert.

**Revendications**

**1.** Une éolienne comportant un moyeu (210) fixé rotatif sur une nacelle (200), au moins deux pales (1, 2, 3) fixées rotatives sur le moyeu (210) pour permettre une modification de l'angle de pas des lames ($\Theta_1$, $\Theta_2$ $\Theta_3$), un système d'orientation des pales (250) pour contrôler individuellement l'angle du pas ($\Theta_1$, $\Theta_2$ $\Theta_3$) de chaque pale, une unité de surveillance pour émettre une première commande de variation de pas, un capteur de position du rotor (238) pour générer un signal de position du rotor ($\beta$) indiquant la position azimutale du rotor, un capteur de vitesse de rotation du rotor (236) pour générer un signal de vitesse de rotation du rotor ($\Omega$) indiquant la vitesse de rotation du rotor, et une tour (100) pour soutenir la nacelle (200), comprenant

un capteur de vitesse de pas nautique (230) pour générer un signal de vitesse de pas nautique ($\lambda$) indiquant la vitesse de pas nautique de l'éolienne et une unité de calcul (240, 241) pour recevoir les signaux d'état de l'éolienne comprenant le signal de position du rotor ($\Omega$), le signal de vitesse de rotation du rotor ($\Omega$) et le signal de vitesse de pas nautique ($\lambda$), où l'unité de calcul (240, 241) est conçue pour calculer une deuxième commande de variation de pas sur la base des signaux d'état de l'éolienne, ajouter la deuxième commande de variation de pas à la première instruction de variation de pas pour obtenir la commande de variation de pas totale, et transmettre la commande de variation de pas totale au système d'orientation des pales (250),

**caractérisée en ce que** l'unité de calcul (240, 241) est conçue pour désactiver la deuxième commande de variation de pas lorsque l'écart entre l'angle du pas des pales commandé et l'angle du pas des pales réel dépasse un seuil prédéterminé.

2. L'éolienne selon revendication 1, où la deuxième commande de variation de pas est conçue pour générer des forces aérodynamiques sur les pales (1, 2, 3), qui atténuent les charges induites gyroscopiquement sur les pales de l'éolienne (1, 2, 3), dues au mouvement à la vitesse de pas nautique.

3. L'éolienne selon revendication 1 ou 2, où le contrôle du pas (250) est conçu pour envoyer un signal d'avertissement à l'unité de calcul (240, 241) en cas de désaccord entre les angles de pas commandés et les angles de pas réels $(\Theta_1, \Theta_2, \Theta_3)$.

4. L'éolienne selon revendications 1 à 3, où, dans les cas avec bruit dans le signal de vitesse de pas nautique $(\lambda)$, l'éolienne est conçue pour obtenir un deuxième signal de vitesse de pas nautique du signal instantané $(\lambda)$ via un processus d'établissement de moyennes, ou, d'une façon équivalente, via un filtre passe-bas à décalage de phase zéro, et pour utiliser le deuxième signal de vitesse de pas nautique dans la construction de la deuxième commande de variation de pas à la place du signal instantané $(\lambda)$.

5. L'éolienne selon revendications 1 à 4, où les signaux d'état de l'éolienne comprennent un capteur de champ de vent (232) pour générer un signal de champ de vent (V) indiquant la vitesse et la direction du vent au niveau de l'éolienne.

6. L'éolienne selon revendications 1 à 5, où les signaux d'état de l'éolienne comprennent un capteur de vitesse de lacet (280) pour mesurer la vitesse dans le temps de changement de l'angle de lacet $(\Gamma)$ générant un signal de vitesse de lacet $(\gamma)$ indiquant la vitesse de lacet de l'éolienne.

7. L'éolienne selon revendications 1 à 6, où l'unité de calcul (240, 241) est conçue pour calculer une troisième commande additionnelle de variation de pas sur la base des signaux d'état de l'éolienne, ajouter la troisième commande de variation de pas à la première et à la deuxième commandes de variation de pas pour obtenir la commande de variation de pas totale, et transmettre la commande de variation de pas totale au système d'orientation des pales (250).

8. L'éolienne selon revendication 7, où la troisième commande de variation de pas conduit à la génération de forces aérodynamiques sur les pales (1, 2, 3), qui atténuent les charges induites gyroscopiquement sur les pales (1, 2, 3), dues à la vitesse de lacet $(\gamma)$.

Fig. 1

Blade pitch angle θ₂

Blade pitch angle θ₃

Rotor axis

Blade pitch angle θ₁

Fig. 2

Fig. 3

Fig. 4

Blade pitch angle θ₂

yaw-angle Γ

280

2

210

200

Blade pitch angle θ₃

3

230

220

1

Rotor axis

Blade pitch angle θ₁

100

Fig. 5

270

Pitch-angle sensor θ₃ (measured)

Pitch actuator

θ₃ (commanded)

268

Rotor-Position sensor β

238

266

241

Rotor-Rotation-Rate sensor Ω

236

Pitch-angle sensor θ₂ (measured)

Pitch actuator

θ₂ (commanded)

264

Computational unit

Horizontal wind-direction sensor ψ

234

Wind speed sensor v

232

262

Nautical-pitch rate sensor λ

230

Pitch-angle sensor θ₁ (measured)

Pitch actuator

Pitch control

Nautical-yaw rate sensor Γ

280

260

250

θ₁ (commanded)

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4420692 A
- US 20080206051 A
- US 7309930 B
- US 7400055 B

- WO 2005090781 A1
- WO 2010122316 A
- EP 2037119 A1

### Non-patent literature cited in the description

- **CASELITZ, P. et al.** Reduction of fatigue loads on wind energy converters by advanced control methods. *European Wind Energy Conference,* October 1977, 555-558